# EUROPEAN PATENT APPLICATION

(11) **EP 1 684 251 A2**
(43) Date of publication of application: **26.07.2006**
(21) Application number: 06008971.1
(22) Date of filing: 20.02.2002
(51) Int. Cl.: G08G 1/0968, G01C 21/34, G08G 1/0962

(54) **Travel direction and warning device**

(30) Priority: 20.02.2001 JP 2001043302; 23.02.2001 JP 2001048996; 23.02.2001 JP 2001048997; 28.02.2001 JP 2001053651; 04.04.2001 JP 2001106214
(62) Divisional of application: 02003835.2
(71) Applicant: Matsushita Electric Industrial Co., Ltd., Kadoma-shi Osaka 571-8501 (JP)
(72) Inventor: Takezaki, Manabu, Yokohama-shi Kanagawa (JP); Tamura, Kenji, Yokohama-shi Kanagawa (JP)
(74) Representative: Grünecker, Kinkeldey, Stockmair & Schwanhäusser Anwaltssozietät

(57) **Abstract**

A travel and warning system for providing safety and comfort by assisting the driver of a vehicle, setting a predetermined area about a school as a school zone and giving warning to travel cautiously within the school zone.

## Description

### BACKGROUND OF THE INVENTION

### Field of Invention

The present invention relates to a travel direction device mounted on a vehicle or the like for giving voice direction while driving, and a vehicle warning direction device giving warning voice direction for waking up a driver if the driver dozes off, for preventing unsafe driving such as sudden start, sudden stop or sudden turns, or for preventing turning off or on of the light from being forgotten.

### Description of Prior Art

Conventionally, this kind of travel direction device is integrated in a navigation device. The navigation device detects a current position using a current position detection means such as GPS receiver, and displays on a liquid crystal display the road map data corresponding to the current position via a recording medium such as DVD-ROM or network. An operator sets a destination, and a route searching means searches a recommended route and displays the route over the map on the liquid crystal display. When the vehicle comes near a diverging point such as a junction or an interchange, an enlarged portion of the diverging point or a three-dimensional map thereof is displayed, and a voice direction will tell the driver which direction to move or how far to the destination. The device receives road traffic information such as traffic congestion along the route from a road beacon of the VICS or EM multiplex broadcasting, or the information center, and displays the information on the liquid crystal display so as to give alternative route avoiding the congestion.

Safety of the vehicle driving consists of three factors: a road, a car, and a driver. Specifically, the safety of driving depends on road structure and an environment including weather, structures and equipment of the vehicle, and personality and physical condition of the driver. The structure and equipment of the vehicle have been significantly advanced since more and more electronics technology is used in recent years. Specifically, an anti-skid braking system, air bag system, obstruction detection system on the back of the vehicle, a following distance/ speed control system and the like have come into practical use.

As a factor regarding to the driver, a navigation system has become a practical use as a device for assisting safe driving. The navigation system displays a driving route to the destination on the screen based on the current position detected by using the GPS. The device tells the driver about the junctions, entrances and exits of the expressways, and the information about service area and parking area on its way to the destination so as to provide an environment for the driver to concentrate on driving.

Drive dozing is an example of unsafe driving caused by the driver. In order to prevent the drive dozing, detecting a number of blinking of eyes or steering pattern typical to the drive dozing to wake the dozing driver by outputting warning is a known method.

Furthermore, it is typical of the driver's failure to forget turning off various lighting equipment of the vehicle. Generally, the vehicle lights including the headlight for illuminating during the night drive, and turn signals indicating turning direction can be perceived by the driver from the indication on a dashboard panel when it is lit or operated. Therefore, for example, when the driver turns on the headlight while driving the tunnel during the day time, the indication on the dashboard panel will tell the driver if the light is still on or not so that the driver would not forget turning the light off.

When it comes to a driving warning direction device integrated in a conventional navigation system, for example, a school zone as a part of area information is recorded for the voice direction in the map data, whereby the driver will hear the voice direction saying "school zone" every time driving the school zone in the area where the driver drives often, so the driver might get annoyed by it. If the driver turns off the voice direction function of the travel warning direction device in an effort to avoid the repetitive voice direction, the audio assistance for another school zone in an area unfamiliar to the driver will not be provided.

Moreover, the conventional travel direction device will tell the driver about the information on a traffic congestion along the route although it will not tell the roads used by the school children for their commute. The information on the commuting route of the school children can be useful for the driver to call his/her attention in an area where there are more school children. In the future, it might be possible to add data about the commuting route of the school children onto the road map data to warn the driver about such route based on the data. However, adding the school commuting route all over the country require enormous work and memory capacity, and thus, it would be difficult to realize it.

The conventional drive dozing prevention technique operates by detecting physical condition more likely to occur during the drive dozing. The state of the dozing driver detectable by the conventional technique is already at the dangerous level. Therefore, there can be a case where the drive dozing is detected too late to secure the safety of the driver and any passenger on the vehicle.

The conventional navigation device gives voice direction to inform road condition and traffic condition, but does not give any warning to the driver about detected driving condition. Specifically, even if the information regarding the traffic condition or the road condition is provided to the driver, the given information will not contribute to the safe driving unless the driver is conscious of the safe driving.

Furthermore, the conventional problem of forgetting to turn off the headlight during the day or to turn on at night (in the dark) or forgetting to return the turning signal are still often seen. The driver tends to forget to turn off the headlight after driving through a tunnel because immediately after driving through the tunnel, the surroundings become so bright suddenly that the driver forgets the headlight is still on. The driver tends to forget to turn on the light even at night when driving the lighted streets because the driver can see well enough without turning on the headlight. The driver can forget to return the turning signal when changing lanes where a degree of turn is relatively smaller than that of turning corners because the turning signal does not return automatically to the off position when the turn is too small.

### SUMMARY OF THE INVENTION

A travel direction device of the present invention is characterized in that a direction about a traveling route is set, a notification of the direction is given less frequent than a number of times the a car drives the traveling route if the car drives the traveling route plurality of times. Accordingly, the voice direction is not given all the time, and the user does not get annoyed by the voice direction.

A travel direction device of the present invention is characterized in that the notification of the direction is given a predetermined number of times during a predetermined period of times. Accordingly, the user can set output of the voice direction once in three times or once in four times, for example, and thus, the user does not get annoyed by it.

A travel direction device of the present invention is characterized in that the notification of the direction is given in a predetermined probability every time the car drives the travel route. Accordingly, the voice direction is outputted only sometimes based on a random number table, for example, so as not to annoy the user by it.

A travel direction device of the present invention is characterized in that there are a plurality of types of notification of the direction, and the notification of direction is given by selecting at least one of the plurality of types thereof. Accordingly, the voice direction is given not with the same content all the time but with the different contents, thus avoiding to annoying the user by the voice direction.

A travel direction device of the present invention is characterized in that when the car enters a predetermined area including the traveling route a plurality of times, the notification of direction is given less frequently than a number of times for the car to enter the predetermined area. Accordingly, the voice direction is not given every time the car enters the predetermined area, and thus, the user does not get annoyed by the direction.

A travel direction device of the present invention is characterized in that the predetermined area is composed of a divided plurality of areas, and the plurality of the areas is identified to notify the direction. Accordingly, a plurality of areas of the same type but existing far apart from each other, areas a1, a2, a3, and so on, for example, are considered as area A entirely, and if the direction is given in any one of areas a1, a2, a3 or the like, the voice direction is not given in the rest of them. Therefore, the user does not get annoyed by the direction.

A travel direction device of the present invention is characterized in that the predetermined area is a school zone centered about a school. Accordingly, it is possible to increase attention while driving the school zone so as to secure the safety of children.

As such, according to the present invention, a direction about a traveling route is given less frequently than a number of times the a car drives the traveling route if the car drives the traveling route plurality of times. Therefore, the user who drives the same route a number of times does not get annoyed by the voice direction, and would not turn off the voice direction function. Thus, it is possible to use the voice direction function effectively.

A travel direction device of the present invention is characterized in that the device has a controlling means for setting a predetermined area centered about a school as a school zone and giving warning direction for traveling cautions when a car drives roads in the school zone based on school days information and time information. Thus, by using latitude/longitude information of the school address in the road map data, the school zone is set as an area within a radius of certain kilometers from the school, for example, and by assuming the roads included in the area as commuting roads for students, a warning is given vocally or by display based on the school day information except spring break, summer vacation, fall break, winter break, national holidays and other holidays, and the commuting time information, so that the safety of the driving within the school zone can be enhanced.

A travel direction device of the present invention is characterized in that the school zone is set depending on the school types such as kindergartens, elementary schools, middle schools, and other schools. Accordingly, the school zone is set reasonably by taking into consideration of commuting distance or activity areas of children by setting it smaller for elementary school and larger for middle schools, for example.

A travel direction device of the present invention is characterized in that the school zone is set depending on types of roads, such as vehicle-only roads, roads with or without pedestrian walk, main roads such as national roads, local roads, or narrow streets. Accordingly, by using the road type data included in the road map date, the school zone is set smaller for the main roads such as national roads or the road with pedestrian walk because the vehicle roads and pedestrian walk are relatively far apart, for example, and the school zone is set larger for the narrow streets where the vehicle roads and pedestrian walks are relatively closer. Thus, the school zone is set reasonably.

A travel direction device of the present invention is characterized in that the school zone is set depending on road density. Accordingly, information on a number of roads (links), total road distance or road width within a predetermined area included in the road map data is used to predict whether the area is in urban area or suburban area, and thus the school zone is set reasonably by setting smaller for the urban area where the road density is high whereas larger for the suburban area where the road density is low.

A travel direction device of the present invention is characterized in that the school zone is set depending on area division. Accordingly, the area is set smaller for highly populated area whereas larger for less populated area where the commuting distance is generally longer, thus enabling to set the school zone reasonably.

A travel direction device of the present invention is characterized in that the contents of the direction changes depending on school types such as kindergartens, elementary schools, middle schools and other schools. Accordingly, it is possible to give warning direction reasonably by varying a degree of warning. For example, the school zone for kindergarten, the degree is larger because small children may run into the streets suddenly. The school zone for elementary school has a moderate degree of warning because there still are possibility that the children run into the roads, while the degree may be less of the middle school because the students can be considered as an adults.

The contents may be varied depending on various factors. For example, the contents of the direction may be varied depending on road types such as vehicle-only roads, roads with or without pedestrian walk, main roads such as national roads, local roads, or narrow streets. Accordingly, for example, there is no need for the direction of the vehicle-only roads, whereas the degree of warning may be smaller for the roads with the pedestrian walks along side thereof, and larger for the roads without pedestrian walks. Thus, it is possible to give the direction reasonably. Moreover, the contents may be changes depending on insolation duration of the area. The insolation duration influences hours of activities for school children, so the direction may be given corresponding to the insolation duration of the area that differs area by area due to difference in latitude and longitude. The contents of the direction may be also changed depending on the vehicle speed. If the speed is fast, the degree of warning may be greater while the degree thereof may be less when driving slower.

A travel direction device of the present invention is characterized in that the direction is given before, during, and after passing the school zone. Accordingly, by giving the direction appropriate to each case, the driver can feel ready to drive the school zone before entering the zone, be extra careful while driving the zone, and relax the tension after passing the school zone.

A travel direction device of the present invention is characterized in that a deceleration command signal is sent to a control device of the car when driving through the school zone so as to reduce the speed. Accordingly, not only calling the driver's attention by the voice warning, but also controlling the vehicle speed forcefully not to exceed the speed limit, it is possible to enhance the driving safety in the school zone.

As such, according to the present invention, the school zone is set as a predetermined area centered about the school. Therefore, even if the school zone information is not stored in the DVD-ROM or the road map data obtained externally, it is possible to easily set the school zone only from the position information of the school. Moreover, when the car drives the roads in the set school zone, the voice direction is given based on the school days and time information, and thus, the driving safety of the road in the school zone can be enhanced.

A travel warning direction device of the present invention is characterized in that the device comprises a continuous driving detection means for detecting continuous driving condition by comparing to a pre-set reference value, and a warning output means for outputting the warning direction when the continuous driving is detected by the continuous driving detection means. Accordingly, when the continuous driving where the possibility of doze driving becomes higher due to accumulated fatigue is detected, the voice or display message for calling the driver' s attention is outputted so as to prevent the doze driving before it happens.

A travel warning direction device of the present invention is characterized in that the continuous driving detection means detects long time driving. Accordingly, when the long time driving where the possibility of doze driving becomes higher due to accumulated fatigue is detected, the voice or display message for calling the driver's attention is outputted so as to prevent the doze driving before it happens.

A travel warning direction device of the present invention is characterized in that the continuous driving detection means detects long distance driving. Accordingly, when the long distance driving where the possibility of doze driving becomes higher due to accumulated fatigue is detected, the voice or display message for calling the driver's attention is outputted so as to prevent the doze driving before it happens.

A travel warning direction device of the present invention is characterized in that detection by the continuous driving detection means is reset if discontinued for more than a predetermined period of time. Accordingly, even if driving for a long time or long distance, continuous driving detection is reset when the driver is recovered from fatigue after taking a break of more than a predetermined period of time. On the contrary, the continuous driving is considered as continuing if only a short break less than the predetermined time period is taken because the driver is not recovered from fatigue. Therefore, it is possible to enhance the reliability of the detection result.

A travel warning direction device of the present invention is characterized in that the travel warning direction device comprises a driver change detection means for detecting a change of a driver, and detection of the continuous driving detection means is reset when the driver change detection means detects the driver change. Accordingly, if the driver change is detected based on a signal from the vehicle speed sensor provided on the vehicle, door sensor, or a sensor for detecting tilting angle of steering wheel or seat position, the driving time and distance are reset so as to improve the reliability of the search result.

A travel warning direction device of the present invention is characterized in that the reference value changes depending on road types. Thereby, by varying the reference for determining the long time driving or long distance driving depending on road types such as expressways where fatigue level is relatively less and local roads where the fatigue level is relatively high, it is possible to improve the detection accuracy.

A travel warning direction device of the present invention is characterized in that the reference value changed depending on time zone. Thereby, by varying the reference for determining the long time driving or long distance driving depending on time zone such as daytime when fatigue level is relatively less and night time when the fatigue level is relatively high, it is possible to improve the detection accuracy.

A travel warning direction device of the present invention is characterized in that the device comprises a monotony driving detection means for detecting whether of not a car drives with a pre-set reference speed for a predetermined period of time when driving on local roads, and a voice output means for outputting a voice warning direction when the monotony driving detection means detects that the car drives within the reference speed range for the predetermined period of time. If the driver drives by maintaining a certain speed, the driver drives monotonously, which increase the sleepiness. However, although the driver tends to driver in the certain speed in the expressways by using auto-drive function or auto-cruse function, if the monotony driving is detected while driving the local roads, the warning can be given relatively early so as to prevent doze driving in advance.

A travel warning direction device of the present invention is characterized in that when detecting the monotony driving, a new reference speed is set when the car drives in a speed out of the reference speed range. Accordingly, when the roads gets wider under the monotony driving, the car could accelerate, and in that case, new and accelerated speed is set as a new reference speed so as to detect the monotony driving continuously.

A travel warning direction device of the present invention is characterized in that the monotony driving detection means has a plurality of reference speed candidates for possible reference speed to be set, sets the reference speed range between the reference speed candidate faster than the set reference speed and the reference speed candidate slower than the set reference speed, stores the last time of the set reference speed, sets the reference speed candidate out of the reference speed range as a new reference speed when the vehicle speed is out of the reference speed range, and calculates the traveling time of the new reference speed range from the latest time when the set reference speed stored immediately before. Accordingly, when the driving speed becomes out of the reference speed range, the driving time in the new reference speed range is calculated, thereby improving the detection accuracy.

A travel warning direction device of the present invention is characterized in that expressions, age and sex of the voice, changes depending on time zone, season, events or a number of travel. Accordingly, when the warning is given to the driver, instead of repeating the same warning over and over, by changing the expressions depending on the time zone (day or night), seasons, events such as Golden week holidays or the like, or a number of times the driver drives the route, or by changing the voice in woman' s voice or children' s voice, the warning works more effectively to the driver, thus enabling to prevent doze driving in advance.

A travel warning direction device of the present invention is characterized in that the device outputs the voice warning direction when a long driving or long distance traveling is detected when comparing with a pre-set reference value. Accordingly, when long driving or long distance driving where the possibility of doze driving becomes higher due to accumulated fatigue is detected, the voice warning for calling the driver's attention is outputted so as to prevent the doze driving before it happens.

As such, according to the present invention, long time driving, long distance driving or monotony driving that raise the possibility for doze driving due to accumulated fatigue is detected, warning direction is given to the driver so as to prevent the doze driving in advance.

A travel warning direction device of the present invention comprises an unsafe driving detection means for detecting unsafe driving by comparing a pre-set reference value, and a voice output means for outputting a voice warning direction when the unsafe driving is detected. Accordingly, when unsafe driving is detected, the voice warning is given to the driver, thus enabling to raise the driver's awareness for the safe driving.

A travel warning direction device of the present invention is characterized in that the unsafe driving detection means detects sudden start and stop of the car. Accordingly, when the means detects the sudden start that is in danger of crushing into other cars, or the sudden stop that is in danger of being crushed by other cars, the warning is given to the driver of the unsafety, thus enabling to raise the driver's awareness of the safe driving.

A travel warning direction device of the present invention is characterized in that the unsafe driving detection means detects abrupt steering. Accordingly, when abrupt steering that is in danger of crush or rolling is detected, the warning is given to the driver of the unsafety, thus enabling to raise the driver's awareness about the safe driving.

A travel warning direction device of the present invention is characterized in that the unsafe driving detection means detects abrupt steering by using an angular velocity sensor. Accordingly, by detecting the rotation angle of the vehicle by the gyro sensor using the angular velocity sensor or detecting steering angle by the angular velocity sensor provided to the steering wheel, it is possible to detects the abrupt steering.

A travel warning direction device of the present invention is characterized in that the warning direction by the voice output means is given in a certain ratio relative to a number of times the warning is generated or irregularly. Accordingly, when unsafe driving such as sudden start, sudden stop or abrupt steering is detected, the warning is given only sometimes instead of each time in order to prevent the driver from feeling annoyed by the warning, thus enabling to raise awareness of the driver about the safe driving gradually.

A travel warning direction device of the present invention is characterized in that expressions and sex and age of the voice by the voice output means changes depending on time zone, seasons, events, and a number of time of travel. Accordingly, when the warning is given to the driver, instead of repeating the same warning, expression may be changed depending on the time zone (day or night), season, events such as Golden week holidays, or a number of times the driver drives the same route, or voice is outputted in woman' s voice or children' s voice, so as to make the warning work more effectively, thus enabling to raise the driver's awareness toward the safe driving.

As such, according to the present invention, the unsafe driving detection means for detecting unsafe driving by comparing to the pre-set reference value and the voice output means for outputting the voice warning direction when unsafe driving is detected are provided. When unsafe driving is detected, the voice warning is given to tell the driver of the unsafety so as to raise driver's awareness about the safe driving. Therefore, it is possible to provide a drive assisting device superior to a conventional information providing device.

A travel warning direction device of the present invention is characterized in that the device comprises a time zone detection means for detecting whether or not the time is in the daytime; a lighting detection means for detecting duration when the vehicle light is illuminated; and an output means for giving a warning direction to turn on the vehicle light when the daytime zone is detected and the vehicle light is detected as being on for more than a certain period of time. Accordingly, if the headlight is turned on to drive through a tunnel during the daytime, for example, and if the driver forgets to turn off the light after driving the tunnel, the warning direction of voice or the like to tell the driver to turn off the light is given after a predetermined time period is elapsed, thus enabling to prevent the vehicle light from being forgotten to be turned off.

A travel warning direction device of the present invention is characterized in that the time zone detection means detects whether or not the time zone is in daytime from the current date information and position information. Accordingly, the time zone for the daytime is set based on the ambient brightness that changes depending on seasons and areas, and thus by referring to the current data information and position information, the correct daytime time zone can be detected.

A travel warning direction device of the present invention is characterized in that the device comprises a means for detecting whether or not driving in the tunnel, and the warning direction is prohibited when driving the tunnel. Accordingly, although the vehicle light is turned on when driving in the tunnel, the warning direction is not outputted while in the tunnel because the traffic may get congested in the tunnel.

A travel warning direction device of the present invention is characterized in that the device comprises a means for detecting bad weather, and the warning direction is prohibited when driving under the bad weather. Accordingly, although the vehicle light is turned on under heavy rain or in the fog, the warning direction is not given because the light needs to be on under such weather condition.

Moreover, a travel warning direction device of the present invention is characterized in that the warning direction is given when the time zone is not detected as the daytime, and if the vehicle light is not detected to be turned on for more than a predetermined period of time. Accordingly, even if the headlight or the like is forgotten to be turned on during the night time, the voice warning is given to the driver, and thus, it is possible to prevent the vehicle light from being forgotten to be turned on.

As such, according to the present invention, the device comprises a time zone detection means for detecting whether or not the time is in the daytime; a lighting detection means for detecting duration for the vehicle light is illuminated; and an output means for giving a warning direction to turn off the vehicle light when the daytime zone is detected and the vehicle light is detected as being on for more than a certain period of time. Accordingly, it is possible to prevent that the headlight or the like is forgotten to be turned off. When the daytime time zone is not detected, and turning on of the vehicle light is not detected for more than a predetermined period of time, the warning direction to tell the driver to turn on the vehicle light is given, thus enabling to prevent that the headlight or the like be forgotten from being turned on.

Accordingly, a first object of the present invention is to provide a travel direction device in which the user can hear the voice direction about a traveling route.

A second object of the present invention is to provide a travel direction device that sets a school zone centered about a school with ease so as to enhance the driving safety of the roads in the school zone.

A third object of the present invention is to provide a travel warning direction device to call the driver's attention not to doze driving instead of detecting the doze driving of the driver.

A forth object of the present invention is to provide a travel warning direction device that can raise the driver's awareness about safe drive by calling the driver's attention.

A fifth object of the present invention is to provide a travel warning direction device for preventing turning off or on of the vehicle light from being forgotten.

This and other advantages of the present invention will be apparent to those skilled in the art upon reading and understanding the following detailed description with reference to the accompanying figures.

### BRIEF DESCRIPTION OF THE DRAWINGS

FIG. 1 is a block diagram illustrating a structure of a navigation system including a travel direction device according to Embodiment 1 of the present invention;
FIG. 2 is a flow chart illustrating a school zone travel processing operation in Embodiment 1;
FIG. 3 is a diagram showing voice direction setting screen regarding facilities in Embodiment 1;
FIG. 4 is a flow chart illustrating a school zone travel processing operation in Embodiment 2;
FIG. 5 is a table showing school zone information in Embodiment 2;
FIG. 6 is a flow chart illustrating another school zone travel processing operation according to Embodiment 3 of the present invention;
FIG. 7 is a block diagram showing a structure of a navigation device including a travel warning direction device according to Embodiment 4 of the present invention;
FIG. 8 is a flow chart illustrating travel warning direction processing operation in Embodiment 4;
FIG. 9 is a flow chart showing latter portion of the travel warning direction processing in Embodiment 4;
FIG. 10 is a vehicle speed intergradations diagram illustrating unvarying driving on a local street in Embodiment 4;
FIG. 11 is a block diagram showing a structure of a navigation device including a travel warning direction device according to Embodiment 5 of the present invention;
FIG. 12 is a flow chart illustrating a travel warning direction processing operation at a time of a sudden start or a sudden stop according to Embodiment 5;
FIG. 13 is a flow chart illustrating a travel warning direction processing operation at a time of abrupt steering according to Embodiment 5;
FIG. 14 is a block diagram showing a structure of a navigation system including a travel warning direction device according to Embodiment 6 of the present invention;
FIG. 15 is a flow chart illustrating a processing operation for preventing turning off of light according to Embodiment 6 of the present invention;
FIG. 16 is a flow chart illustrating a processing operation for preventing turning on of light according to Embodiment 6 of the present invention; and
FIG. 17 is a table showing data structure of time zone information according to Embodiment 6 of the present invention.

### DESCRIPTION OF THE PREFERRED EMBODIMENTS

Hereinbelow, embodiments according to the present invention will be described with reference to the drawings.

### Embodiment 1

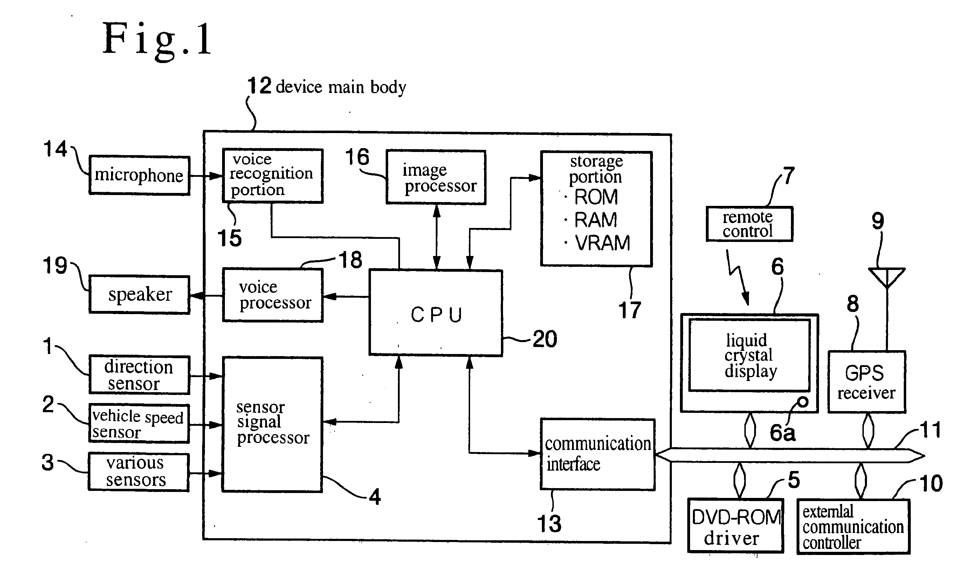

FIG. 1 is a block diagram showing a structure of an in-vehicle navigation system including a travel direction device according to Embodiment 1 of the present invention.

In FIG. 1, the in-vehicle navigation device includes a direction sensor 1, a vehicle speed sensor 2, and various sensor 3 detecting other factors than that of sensors 1 and 2. The direction sensor 1 uses a vibration gyro and detects moving direction of an own car. The vehicle speed sensor 2 generates a vehicle speed pulse corresponding to wheel rotation number of the vehicle having the device mounted thereon. The various sensor 3 includes a sensor for detecting backward movement of the vehicle, a sensor for detecting parking of the vehicle, a sensor for detecting turning on of the light, a lighting intensity sensor for detecting lighting of the vehicle lights, a sensor for detecting switching on of the light, and a raindrop sensor for detecting rain fall and fog. The various sensor 3 also includes a sensor for detecting position of a key switch of the vehicle, sensor for detecting backward movement of the vehicle by a shift lever position, sensor for detecting parking of the vehicle by a parking brake, a sensor for detecting turning on of the light, sensor for detecting changes in seat position, sensor for detecting opening and closing of doors, and sensor for detecting tilting angle of the steering wheel. A sensor signal processing portion 4 calculates a moving direction of the vehicle based on a signal from the direction sensor 1, calculates a traveling distance and the vehicle speed from vehicle speed signal from the vehicle speed sensor 2, and generates signal necessary for control based on a signal from various sensor 3.

A DVD-ROM drive 5 read out map data, voice data, voice recognition dictionary data and the like. A map obtained by reading the map data is displayed on a liquid crystal display 6. The liquid crystal display 6 displays a map, a current position and direction of the own car, operation menu and the like. On a front surface of the display 6, a light receiving portion 6a is provided for receiving signal from a remote control 7. The liquid crystal display 6 makes up a part of a warning output means, and has a function of displaying warning messages and the like other than the above described map, current position and direction of the own car, and the operation menu. The remote control 7 and a touch panel and operation buttons provided on the front surface of the liquid crystal display 6 consists a operating portion.

A GPS receiver 8 has a GPS antenna 9 and can calculate the current position (latitude and longitude) of the own car by receiving radio wave transmitted from a plurality of GPS satellites. The GPS antenna 9 is for receiving GPS radio wave. The navigation device has an external communication controller 10 to have a transmitting function. The external communication controller 10 connects with a network such as the external Internet via a cell phone or the like. The DVD-ROM drive 5 is integrated with the liquid crystal display 6 and disposed on a dash board of the vehicle with the GPS receiver 8, and they are connected to a communication interface 13 of a device main body 12 through an in-vehicle LAN 11. The device main body 12 is mounted in a trunk of the vehicle or a center console in the car. The device main body 12 is connected to a microphone 14.

The device main body 12 has, other than the above-described sensor signal processing portion 4 and a communication interface 13, a voice recognition portion 15 for receiving a voice signal from the microphone 14, a image processor 16, a recording portion 17, a voice processor 18, and a CPU 20 as a controlling means for controlling operation of the above-described each functions 4, 13, 15, 16, 17 and 18. The microphone 14 is disposed in the vicinity of the driver in the car, and provided for inputting words from a user. The voice recognition portion 15 recognizes input voice by analyzing frequency of word input from the microphone 14.

The image processor 16 processes for formation of a display image based on the map data, the data on current position of the own car, building data and the like. A storage portion 17 includes ROM with programs and data stored therein, RAM for storing task data temporarily, and VRAM for storing image data. A voice processor 18 convert phonemic symbol sequence outputted as a result of voice recognition into voice signals, and convert voice data stored in the ROM of the storage portion 17 into voice signals. A speaker 19 outputs voice assist of search results, voice recognition result, voice direction including junction direction on the driving route, divergence direction, toll direction, exits direction, and school zone direction, and operation of the remote control, all based on signals from the voice processor 18. The speaker 19 may be a part of a warning outputting means along with the voice processor 18 so as to output voice direction such as warning direction. The CPU (central processing unit) 20 controls the entire device, executes software programs such as a current position calculating means, and a route searching means so as to implement functions as the navigation device, and processes the voice direction.

Next, as operations according to the present embodiment, a basic operation (route searching operation and route direction operation) for a navigation device will be described. In FIG. 1, the device is turned on by a predetermined operation such as turning on of accessory power by turning engine key or the like. The current position searching means in the CPU 20 calculates precise current position of the own car based on position information from the GPS receiver 8 and data obtained by the sensor signal processing portion 4 processing signals from the direction sensor 1 and the vehicle speed sensor 2. Based on the vehicle position information, the CPU 20 reads corresponding road map data from the DVD-ROM through the DVD-ROM drive 5. The image processor 16 converts the map data into the image data so as to store in the VRAM of the storage portion 17 temporarily, and to convert the image data into color signals thereafter. Along with the car position, the road map data processed as above is displayed on the screen of the liquid crystal display 6 through the communication interface 13. The road map data may be obtained from an external server via the external communication controller 10. On the other hand, when an address of destination and the like is input through the microphone 14, the voice recognition portion 15 recognized the address, the CPU 20 set the address as the destination, and stores in the RAM of the storage portion 17. The route searching means in the CPU 20 calculates the best route from the current position of the car to the specified destination, and displays the route on top of the map on the liquid crystal display. As the driver drives the car along the guided route displayed on the liquid crystal display 6, the CPU 20 sequentially updates the current-position mark of the own car on the liquid crystal display based on the current position information calculated by the current position detection means and road network data on the road map data. When the car comes near a divergence point in the guided route, the voice direction added to the road map data is outputted from the speaker 19. The driver can drive to the destination in the shortest time without getting lost by the navigation df the navigation device.

Next, as an example of the voice direction, a case where the driver drives through a school zone will be described. The road map data stored in the DVD-ROM or obtained externally via the external communication controller 10 includes information on types of schools such as nursery schools, kindergartens, schools for disabled, elementary schools, and middle schools, and their positions (latitude and longitude) . It also contains information on types of roads such as expressways, local roads, road width exceeding 5.5 m, and road width exceeding 3.0 m, and their positions (latitude and longitude), and further contains information of governmental geographical divisions. Moreover, it can identify road density from distance information relative to adjacent roads.

The school zone is set in advance as an area within a radius of a certain kilometers centered about the school. The area of the school zone is set smaller for nursery schools, kindergarten, schools for disabled, and elementary schools, for example, and larger for middle schools. If the'road width is more than 5.5 m, the school zone is set smaller determining the school in the urban area, whereas the school zone is set larger for the road width less than 5.5 m by determining the school in the suburb area. Moreover, it is possible to check if the roads in the closed area is congested or not, and estimate whether the area is either in the urban or suburb area. According to the governmental geographical divisions, the area may be set smaller for highly populated area, and larger for less populated area. Accordingly, it is possible to set the school zones reasonably.

The ROM in the storage portion 17 stores, as the school zone information, in addition to names and addresses of schools, and latitude and longitude information thereof, information on school days and commuting time zone through the year except spring break, summer vacation, fall break, winter break, national holidays and other holidays is included. Also, the information of the speed limit when driving through the school zone, various voice direction data for driving through the school zone are also stored. The school zone information may be stored in a memory card or on RAM of the storage portion 17 after downloaded from the external server through the external communication controller 10.

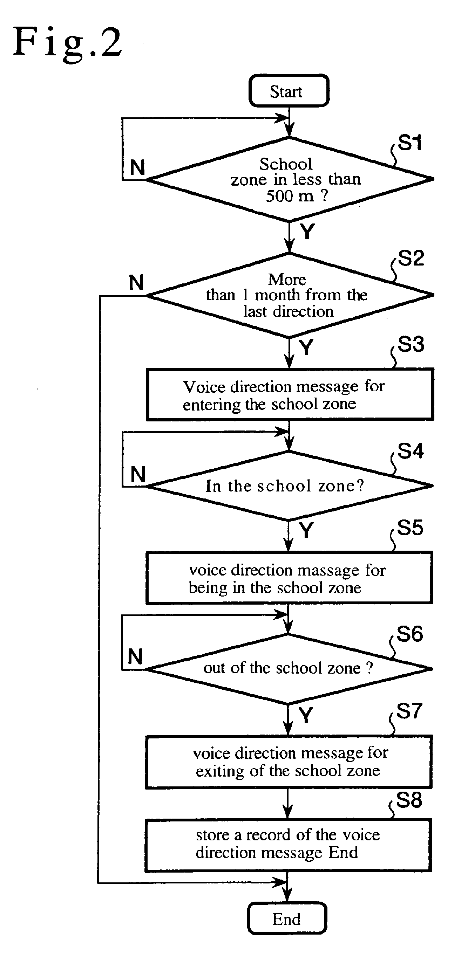

When the car is going into the school zone obtained from latitude and longitude of the school in the school zone information, the current position detecting means detects that the car is going into the school zone from the current position obtained based on the information from the direction sensor 1, the vehicle speed sensor 2, the GPS receiver 8 and the like give. Then, the CPU 20 performs process shown in FIG. 2. FIG. 2 is a flow chart illustrating processing operation by the CPU 20 in a case where the car is driving into the school zone, as an example.

In the operation, when the school zone is set to be told to the driver as information about the traveling route, whether or not the distance to the school zone ahead is less than 500 m is detected (Step S1). If the school zone is more than 500 m away, the same process is repeated until the school zone comes within 500 m. When the school zone is detected within 500 m during the step S1 past voice direction regarding that particular school zone is referred from the record thereof so as to identify if the voice direction of the school zone has been given in the last one month (step S2). If the school zone had been directed within one month, the direction process is notified without notifying about the school zone.

On the contrary, if the voice direction is not given about the school zone within one month during the step S1, the direction information for the school zone is obtained from the school zone information, and a message such as "there is a school zone in 500 m ahead of you. Please drive below the speed limit X kilometers" is outputted from the speaker 19 as the voice direction (step S3) . Whether or not the current position of the car enters into the school zone is detected (step S4) and if so, another message such as "you are now driving the school zone. Children may run into the street. Please be careful" is outputted from the speaker as the voice direction. Whether or not the current position is out of the school zone is detected (step S6), and if so, a message such as "you have passed the school zone. Please continue to drive safely" is outputted from the speaker as the voice direction (step S7) . In order to determine whether or not to give the voice direction about the school zone for the next occasion to pass though the area, the data and time of the voice direction of messages are stored as the record (step S8), and the process is completed.

The direction message may be displayed on the liquid crystal display 6 instead of notifying it as the voice direction. The steps S2 and S3 for preparing for entering into the school zone, steps S4 and S5 for entering into the school zone, and steps S6 and S7 for passing through the school zone are performed independently, and data and time in which the direction is given for each step are stored so as to avoid respective direction to be repeated within a predetermined period of time such as within a month or so. Moreover, it is also possible to avoid repetition of each of all direction within the predetermined period, e.g. one month, only when driving through the school zone.

Other than switching whether or not to give (i.e., whether or not to perform) the direction notification based on passage of a predetermined area such as school zones, switching of performing or not the direction notification may be done when the direction is given along the traveling route such as roads that the car is driving (road divisions such as expressway, national road, prefectural road) and the driving points (particular points such as junctions or land mark points). The predetermined area may include a predetermined area including a predetermined traveling route (roads and points) . Moreover, the switching of give or not-give the direction may be set other than once in a predetermined period of time as described above. Specifically, it can be set to give the direction once in every predetermined number of times, or once or plurality of times in every predetermined traveling distance (herein, the plurality of times means giving the direction every time). Alternatively, it may be set to give the direction without recording the past notification and switch (or select) whether or not to give the direction notification corresponding to calculation result of a predetermined probability (50% or 10%, for example) for each time the direction is to be given. Moreover, instead of switching give or not-give the direction based on passage of the same area or the same traveling route, by considering a plurality of areas or traveling route such as school zones or expressway entrances as the same group, switching of give and not-give the direction may be reflected in the same group existing in another position corresponding to switching of with or without the direction on the traveling route of the same area. Accordingly, when driving through a plurality of school zones during one travel, for example, a direction notification more than desired is not performed by not giving the direction other than the first school zone (or a school zone fulfilling a predetermined conditions).

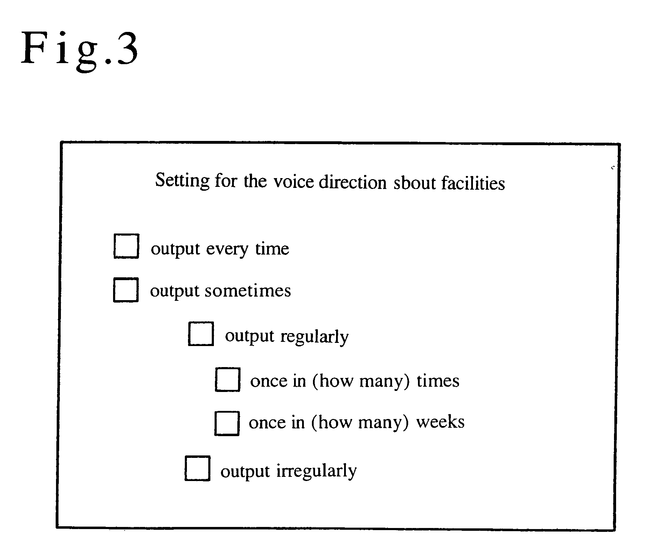

Switching of the notification setting may be set by the user using the remote control 7. Specifically, as shown in FIG. 3, according to the setting screen of the voice direction about facilities displayed on the liquid crystal display 6, the user set "output every time" or "output sometimes". When the user selects "output sometimes", the user further selects either "output regularly" or "output irregularly". When "output regularly" is selected, the user inputs once in how many times or once in how many weeks. The user sets these conditions so as to get the voice direction corresponding to a number of times that the user desires. The set data on the screen is sent to the CPU 20, the CPU 20 controls the voice direction based on the data. If the direction is given every time, the voice direction is given every time the car drives through the school zone. When the direction is outputted only sometimes, i.e., once in certain number of times, a timer counts the times to perform the voice direction. When the direction is outputted once in a certain week, the voice direction is performed based on calendar information. When it is outputted irregularly, random number data is used. The random number data is read from a memory card or downloaded from the external server via the external communication controller 10 to store in the RAM of the storage portion 17. Based on the random number data, the CPU 20 controls so as to give the voice direction only when it gets 2, for example, from the data. When the voice direction is given, expressions, sex or age of the voice source may be changed even for the direction of the same place, so as to give unpredictability to the user, thereby enhancing the attention-getting capability of the voice direction. Similarly, even the direction is given on the screen, font, size, and color of letters and messages may be changed.

As such, according to the present embodiment, the voice direction about the facilities such as school may be set by the user so as to output every time, regularly in a pace of once in a certain number of times or some weeks, or irregularly based on the random number data. Therefore, the user does not get annoyed by the direction, and the voice direction can be performed effectively. In order not to annoy the user, it is preferable to set a frequency of the voice direction equal or less then a frequency for not voice direction. To fulfill the above-described preference, it is desirable to set a number of the direction to give so that the random data is selected with the probability for outputting the direction of 50% or less, or so that the probability for outputting the direction corresponding to pre-calculated generating frequency is 50% or less.

### Embodiment 2

Hereinbelow, Embodiment 2 of the present invention will be described with reference to the drawings. A navigation device including a travel direction device according to the present embodiment has the same structure and function as the navigation device according to Embodiment 1 as shown in FIG. 1.

In the present embodiment, a CPU 20 controls the entire device, and performs software programs such as the current position calculating means and the route searching means to execute functions as the navigation device. The CPU 20 also process the voice direction to warn the driver when driving road in the school zone set centered about the school based on calendar information and time information from an built-in timer.

In Embodiment 2, the road map data stored in the DVD-ROM or obtained externally via the external communication control 10 includes information of school positions (latitude/longitude) categorized by school types such as nursery schools, kindergarten, schools for disabled, elementary schools, and middle schools. The road map data also includes position information of road categorized by road types such as expressways, local roads, roads in 5.5 m or more wide, or roads in 3.0 m or more wide. Moreover, it includes position information and area division according to administrative districts.

Based on those information, the school zone is set in advance within an area with a radius of a certain kilometers centered about a school while referring an area in which each area sets as an commuting area. The area of the school zone may be set smaller for areas centered about nursery schools, kindergartens, schools for disabled, and elementary schools so as to correspond to commuting distance or activities of pupils, for example, and set larger for areas centered about middle schools, thus enabling to set school zones appropriately corresponding to the school facility.

The distance between the vehicle and pedestrians tends longer when roads are wider, whereas the distance therebetween tends to be shorter. Therefore, when the width of roads is 5.5 m or more, the school zone may be set smaller, whereas it may be set larger when the roads width is less than 5.5 m. Accordingly, even if the vehicle is far from the school facility, the school zone can be set appropriately according to the road width.

From a number of roads, total distance thereof, and total area calculated from distance and width of the roads (obtained by multiplying values in the road map data) within a predetermined area, roads density within the narrow area is determined. If a number of roads is large, the total distance thereof is long, or the total area thereof is large, it can be determined as that the area is highly populated, and thus, the commuting distance is relatively short. In that case, the school zone may be set smaller. On the other hand, if the roads are not dense in the area, the commuting distance is more likely longer, thus setting the school zone larger.

In addition to the school types and positions as the school zone information, the ROM of the storage portion 17 includes information on school days through the year except winter break, spring break, summer vacation, national holidays, Sundays and so on when the school is closed, on the commuting time zone, and on the speed limit in the set school zone. Moreover, as notification data for notifying passage of the school zone, the ROM of the storage portion 17 also includes various voice direction data and display direction data. The notification data has wide variety of types corresponding to the above-described school types, road types, insolation duration, school days, commuting time zone, speed limit, and the like. The voice direction data and display direction data may be stored in a changeable memory card or the RAM of the storage portion 17 by downloading from the external server through the external communication controller 10.

As such, from the notification data described above, the direction corresponding to the area environment can be performed by selecting the voice direction that changes its degree of warning depending on the school types. For example, in the school zone centered about the kindergarten, it is more likely that there are smaller children in the area, so it is possible to predict that children may run into the street. Therefore, the voice direction data that is higher degree of warning is selected. The higher degree of warning includes louder voice, higher pitch of the voice than normal setting, the voice with warning sound therewith, command phrase, or repetition of phrase. Moreover, in the school zone centered about the elementary school, it is more likely that there are children bigger than the kindergarten or nursery school children who is easer to recognize from inside the vehicle, and the children of that size may run into the streets. Therefore, the above-described voice direction data is selected with a lower or smaller voice, a voice without the warning sound so as to set the degree of warning less than that of the case for the kindergarten school zone. In case for the school zone centered about middle schools, the voice direction data is selected so as to set a degree of warning to the middle because the middle school pupils can be treated almost as adults. In the school zone centered about the middle school, there are bigger children who is easy to recognize from inside the car and can make better assessment of surroundings, thus enabling to set the voice direction data with smaller degree of warning.

Other than the voice direction, display direction data may be used together with or independent from the voice direction while changing the degree of warning by varying a display size (including feature shape), display color, and display pattern (i.e., zooming in and out, or repeating the zoom-in and out, moving the display vertically or horizontally, or repeating display state and non-display state alternately) . In this case, the degree of warning can be increased by enlarging the display size, changing the color of the display in red or different color from the background color, or changing the pattern more drastically. If the warning degree is increased by using the voice direction data and the display direction data, the voice direction data can be used independently or together with the display direction data so that the driver can recognized the direction without looking at the display, whereas the degree can be lowered by notifying only by the display direction data.

Hereinbelow, the operation of the present embodiment will be described. The basic operation of the navigation device is similar to that of the above-described Embodiment 1. Therefore, the description therefor will be omitted herein.

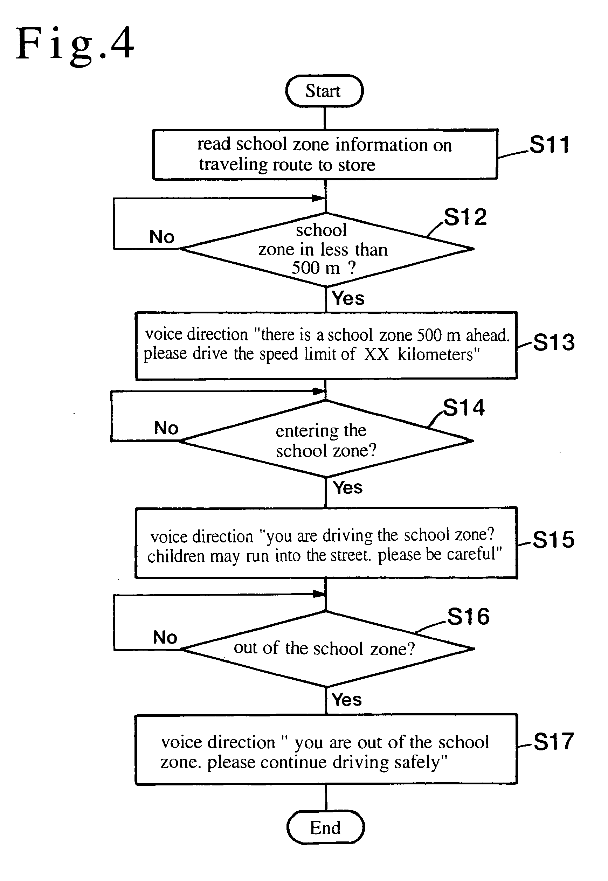

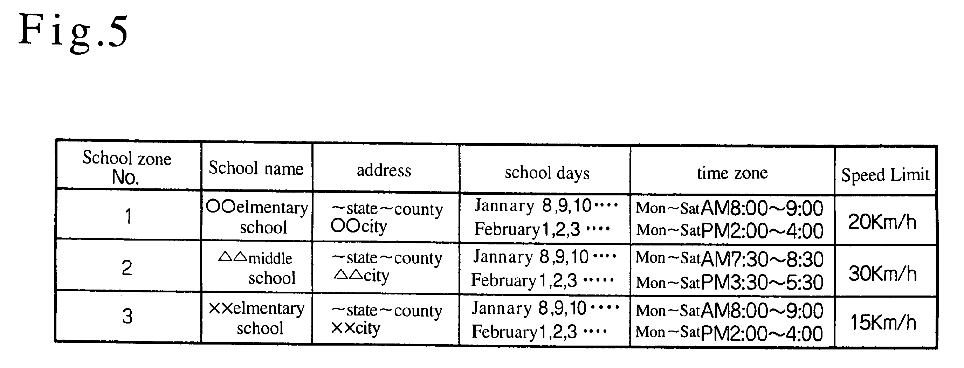

Next, an operation in a case where the vehicle is entering into the school zone in Embodiment 2 will be described. FIG. 4 is a flow chart illustrating processing operation of the CPU 20 in the case of the car entering in the school zone. When a traveling route to the destination is set, all school zone information along the traveling route is read from the ROM or the like of the storage portion 17, and stored in the RAM as a table shown in FIG. 5 (step S11) . While the car drives along the traveling route, whether or not the school zone exists 500 m ahead of the route is monitored all the time by comparing with the current position of the car (step S12).

For example, if the school zone No. 1 with the speed limit of 20 km/h as shown in FIG. 5 is in 500 m from the current position, the voice direction saying "there is a school zone 500 m from here. Please drive under the speed limit of 20 km/h" is outputted from the speaker 19 (step S13). Next, by comparing with the current position, whether or not the car is in the school zone is checked (step S14), and if so, "you are now driving through the school zone. Please be careful of children. They may run into the street" is outputted from the speaker 19 (step S15). When the car is out of the school zone (step S16), the voice direction "you are out of the school zone. Please continue with your safe driving" is outputted from the speaker 19 (step S17), and the process is completed.

The contents of the voice direction may be varied depending on types of roads. Specifically, the voice direction is not given for the vehicle only roads, the degree of warning is low for the roads with pedestrian walk provided on the side thereof, and the warning degree may be increased for the road without the pedestrian walk. The voice direction may be changed depending on the insolation duration of the area. Also, time zone for the children to be active may be different depending the insolation duration that is different due to difference in latitude and longitude, and the voice direction may be set to be given for such time zones.

As for driving the school zone, threshold may be set depending on the school types rather than speed limit set for the roads. For example, if there is a kindergarten in the zone, the threshold may be set lower than the legal speed limit so as to deal with children running into the street suddenly. If an elementary school is in the zone, the threshold may be set slightly lower than the legal speed limit to deal with any children running into the street when they play jokes or the like. Moreover, if there is a middle school in the zone, the threshold may be set to the legal speed limit. It is possible to give the voice direction to slow down when driving faster than the speed limit or to warn the driver of a possible annoyance of the following car when driving too slowly.

According to Embodiment 2, when the traveling route to the destination is set, all the school zone information along the traveling route will be read from the storage portion, and appropriate voice direction is given to each case where the driver drives towards the school zone, passing the zone, and leave the zone, thus enabling to encourage safe driving in the school zone so as to reduce traffic accidents in the zone.

### Embodiment 3

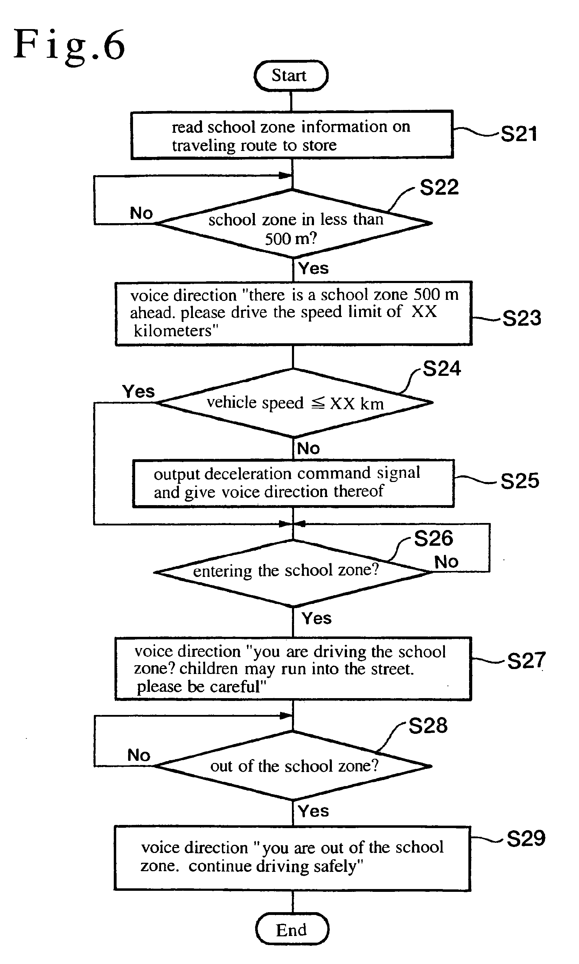

Hereinafter, another process in a case where the car is entering into the school zone will be described. FIG. 6 is a flow chart illustrating another processing operation of the CPU 20 in a case where the car is entering into the school zone.

In this processing operation, when a traveling route to the destination is set, information on all the school zone along the traveling route is read form the ROM or the like of the storage portion 17, and the information is stored in the RAM as a table as shown in FIG. 5 (step S21). While the vehicle drives along the traveling route, whether or not the school zone exists within 500 m is monitored all the time by comparing to the current position (step S23).

For example, if there is the school zone No. 2 with the speed limit of 30 km/h as shown in FIG. 5 in 500 m ahead from the current position, the voice direction saying "there is a school zone 500 m ahead. Please drive under the speed limit of 30 km/h" is outputted from the speaker 19 (step S23). Next, whether the vehicle speed signal input from the sensor signal processing portion 4 indicates below the speed limit of 30 km/h is checked (step S24), and if the vehicle goes faster than the speed limit, a speed reduction instruction signal is outputted to ECU (electronic control unit) of the vehicle so as to output the voice direction "You are driving faster than the speed limit. The car will be slowed down automatically for your safety" is outputted from the speaker 19 (step S25) . In the ECU, throttle valve aperture of the engine is gradually lowered due to the speed reduction instruction signal so as to reduce the speed forcefully below the speed limit. In the steps S24 and S25 may be selected arbitrarily by the user as an option instead of added as a routine process. Next, by comparing to the current position of the vehicle, whether or not the car is in the school zone is checked (step S26), and if so, the voice direction saying "you are driving the school zone. Children may run into, so please drive carefully" is outputted from the speaker 19 (step S27). When the car is out of the school zone (step S28), the voice direction saying "you have passed the school zone. Please continue with your safe driving" is outputted from the speaker 19, and the process is completed.

As such, according to Embodiment 3, if the car is driving faster then the speed limit in the school zone, the car may be slowed down forcefully so as to drive below the speed limit, or if forceful slow-down is not preferred, a notification for exceeding the speed limit may be given, thus enabling to encourage the driver to drive safely in the school zone so as to reduce the traffic accidents.

### Embodiment 4

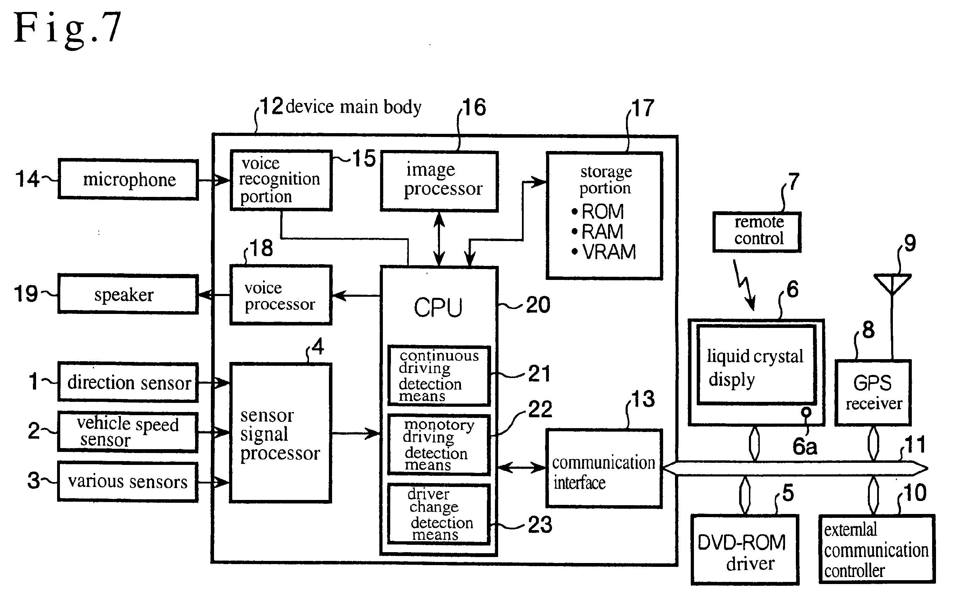

Next, with reference to the drawings, Embodiment 4 of the present invention will be described. FIG. 7 is a block diagram showing a structure of an in-vehicle navigation device including a travel warning direction device according to Embodiment 4 of the present invention. As is clear from FIG. 7, the navigation device including the travel direction device according to Embodiment 4 basically has the same structure with the navigation device according to Embodiment 1 shown in FIG. 1. Parts and functions with the same reference numerals in FIG. 1 has the same function in the present embodiment, and thus, the detailed description therefor will be omitted herein.

In the present embodiment, the CPU 20 has an added function to realize a purpose of warning drivers no to drive dozing. Therefore, the CPU 20 includes a continuous driving detection means 21, a monotonic driving detection means 22, and a driver change detection means 23 in addition to the current position calculation means and the route searching means for realizing the navigation function. The added means are executed as software.

The various sensors 3 used in the present embodiment is as follows: sensor for detecting a position of the vehicle key switch, sensor for detecting backward movement of the vehicle from the shift lever position, sensor for detecting parking of the vehicle from the parking brake, sensor for detecting turning on of light, sensor for detecting a change in a seat position, sensor for detecting opening/closing of doors, and sensor for detecting tilting angle of the steering wheel.

Moreover, the liquid crystal display 6 makes up a part of a warning output means, and has a function of displaying the warning message in addition to functions of displaying the map, the current position, direction, and the operation menu. Similarly, the speaker 19 makes up a part of the warning output means together with the voice processor 18. The speaker 19 outputs by voice results of search and voice recognition, directions for junctions, divergence points, toll, and exits on the traveling route, the voice direction of the operation instruction from the remote control 7, as well as the warning direction.

Hereinbelow, operations of the present embodiment will be described. A basic operation of the navigation device overall is similar to that of the above-described Embodiment 1, and thus, the description therefor is omitted herein.

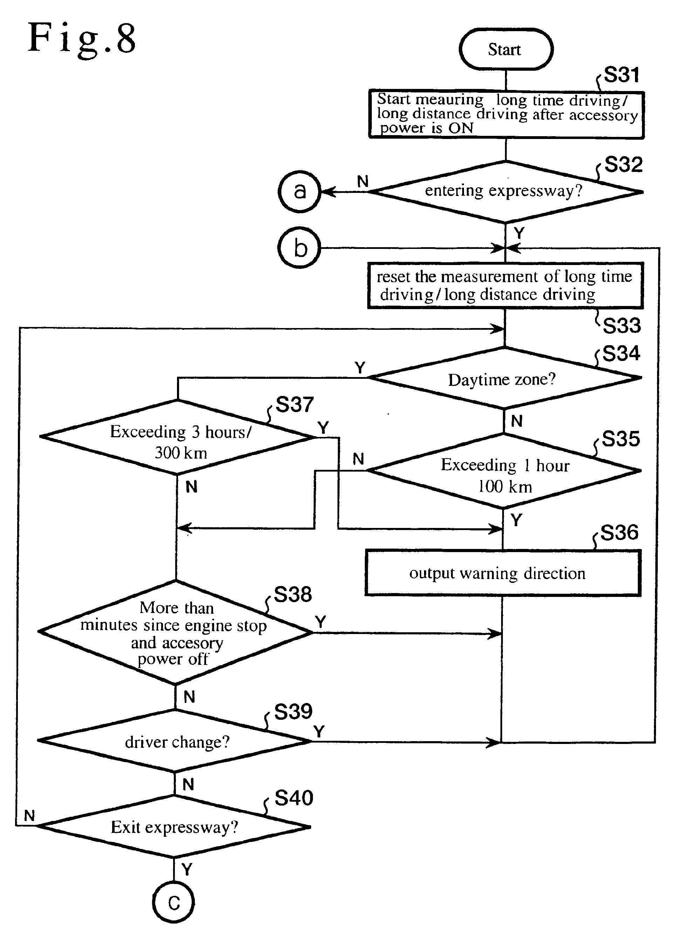

Next, a warning direction operation for a long drive or long distance drive by the driver will be described. FIG. 8 is a flow chart illustrating processing operation of the warning direction by the CPU 20 in a case where the driver continues to driver for a long time or over a long distance.

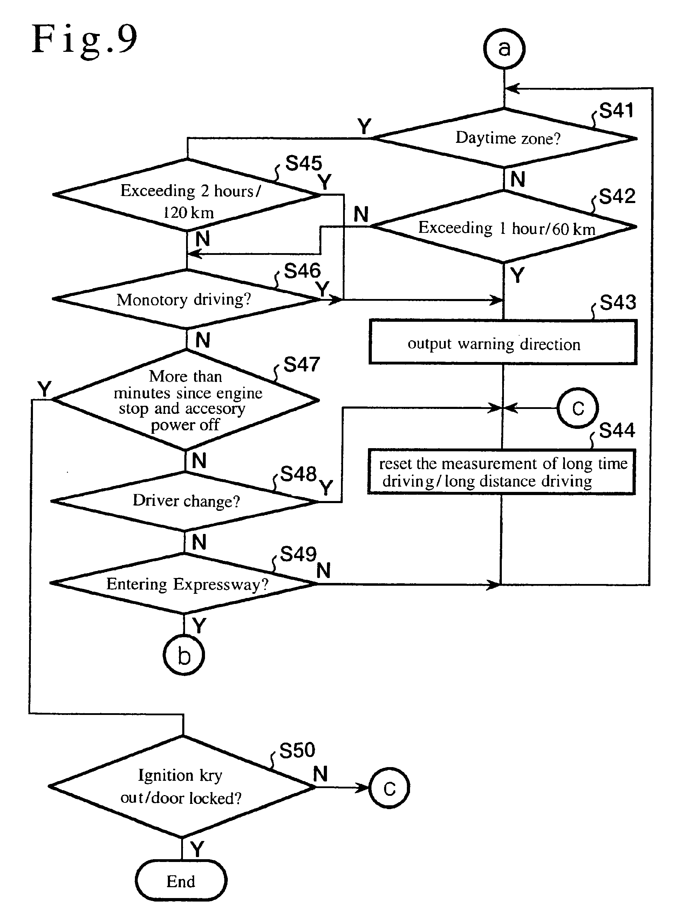

In the processing operation, the CPU 20 activated the continuous driving detecting means 21 as it recognizes from a signal from the sensor signal processing portion 4 that the accessory power is turned on by the vehicle key switch, and starts measuring the long time traveling or long distance traveling integrating traveling hours or traveling distance (step S31) . When the vehicle leaves a driver's house or from a parking lot to start driving, the above-described navigation device operates. Next, whether or not it drives expressways is checked (step S2). The road map data includes the road type data including expressways and local roads, so the it recognized from the current position information that the car is on the local road or on the expressway. If the car continues to drive on the local roads, the device proceeds to operation shown in FIG. 9. If the car enters the expressway, the measurement of the long drive or long distance drive is reset, that is, integrated value is initialized (step S33). It initializes the value because when there is an expressway along the traveling route to the destination it is preferable to set the base point for measuring the long drive or long distance drive at a time the car enters the expressway..

Next, whether or not the car,drives expressway during the day time is checked (step S34) . As an example, the day time herein refers to 6 a.m. to 6 p.m. while the night time refers to 6 p.m. to 6 a.m. However, it may vary from place to place and from season to season. When the car drives during the day time, whether or not the driving time exceeds 3 hours or the driving distance exceeds 300 km is checked (step S37), and if it exceeds, the device recognizes that it is a long drive or long distance drive, and the warning direction to call the driver's attention is outputted (step S36). The warning direction may change the expression or voice type such as voice of women or children depending on a time zone, season, events, or a number of times of traveling.

For example, in spring, the warning direction may be set to say "the spring has come. It is nice and warm outside, but don't be too comfortable with it while you are driving".

In summer, for example, the following warning direction may be outputted: "Don't rely too much on air conditioner. Feel the summer wind and get refreshed".

In autumn, the warning direction may be "how nice to drive on a long autumn night, but be careful for speeding or doze driving".

In winter, for example, the warning direction may say "Isn't heater too much for you? How about getting some fresh cold winter wind for a change".

When the driver drives the car for his long-term holiday, the warning direction may be outputted to say "Be extra careful for the midnight drive. You don't want to miss your holiday because of the accident".

When it comes to the New Year, the voice direction saying "a happy new year! let's have an enjoyable year with your safety drive for no accident and no violation" may be outputted.

When it is determined that the car is driving the night time in the step S34, whether or not the driving time exceeds one hour or the driving distance exceeds 100 km is checked (step S35), and if so, it recognizes it is a long drive or long distance drive, and the warning direction may be outputted (step S36). After the warning direction, a reset process of step S33 is repeated, and the following processes are also performed repeatedly thereafter. During the day or the night, in a case where the car is not driven for a predetermined period or distance, whether the engine is stopped and the accessory power is turned off, and such conditions continues for more than 15 minutes or not is checked (step S38) .If all conditions are satisfied, the device recognizes that the car has been parked in the service area or the parking area, so the driver is recovered from driving fatigue. Therefore, the reset process of the step S33 is preformed again so as to start other processes all over again. If the engine has not stopped nor the accessory power has not been turned off, or if the engine has stopped and the accessory power has been turned off for less than 15 minutes, a change of a driver is checked (step S39), and if the driver has been changed, the reset of the step S33 is performed, and the following processes are performed likewise. When the car is recognized as parked from the vehicle speed senor, brake sensor, and parking sensor, and if the door sensor detects more than 2 doors including the driver's side door has been opened, the driver change detection means 23 of the CPU 20 determines that the driver has been changed. To determine the driver change, it is possible to add other conditions such as change of a seat position of the driver's seat by the seat position sensor, an angle adjustment of rearview mirror or side mirror by the mirror position sensor, a change in the tilting angle of the steering wheel by the tilting angle sensor for the steering wheel. If the driver has not been change, whether or not the car exits the expressway is checked (step S40), and if it is still on the expressway, steps following the step S34 are repeated. If the car drives on the local roads after exiting the expressway, the device proceeds to step S44 in FIG. 9.

As shown in FIG. 9, when the car leaves from the driver's house or a parking lot and drives on the local roads, the CPU 20 checks if it is during the day time (step S41) . If it is the day time, whether or not the driving time exceeds 2 hours or the driving distance exceeds 100 km is checked (step S45), and if it exceeds, it recognizes that the driver drives long hours or long distance, thus outputting the warning direction (step S43). If it is the night time, whether or not the driving time exceed one hour or the driving distance exceeds 60 km is checked (step S42), and if it exceeds it, it is recognized as a long drive or long distance drive, and the warning direction is outputted in step S43 likewise. After the warning is given, the measurement for the long drive or long distance drive is reset (step S44).

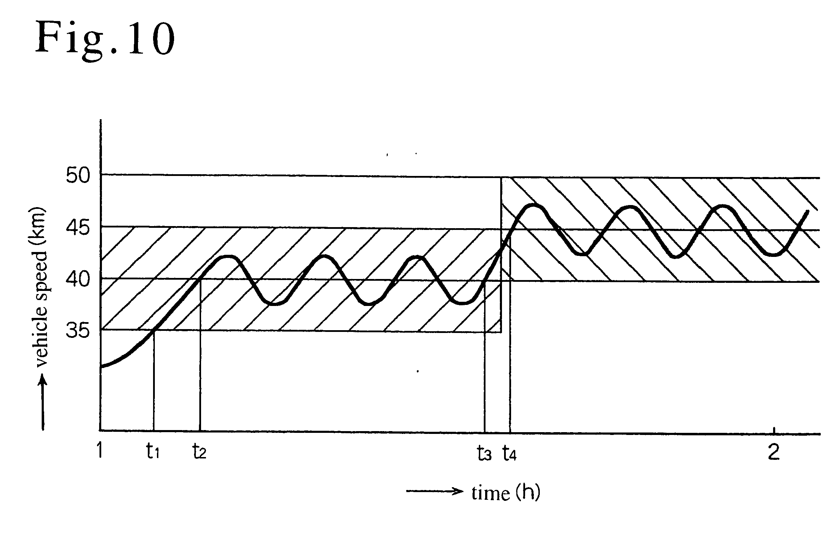

During the day or the night, if the driving time or the driving distance is less than a predetermined value, the monotonic driving detection means 22 of the CPU 20 checks if the driver drives monotonously (step S46) . The monotonic driving uses herein means driving within a range of reference speed on a local road for a certain period of time. For example, as shown in FIG. 10, assume that the lower value of the reference speed is 40 km/h, a speed range of the monotonic driving is ±5 km/h, and the reference speed (reference speed candidate) is in increments of ±5 km/h. The monotony driving detection means 22 measures a continuous duration of the speed range of the monotony driving from a time t1 as a base, which is the first point where the reference speed reaches ±5 km/h after t2 where the car reaches the reference speed 40 km/h. If the driving speed is out of the speed range of the reference speed, the speed of the t4, which is the moment when the car drives out of the reference speed range, is set as a new reference speed (obtained by adding or subtracting ±5 km/h from the first reference speed) . By setting a base point as t3 in which the car reaches ±5 km/h of the new reference speed, the monotony driving is measured again for the continuous duration for the speed range. If the continuous duration of the monotony driving in the speed range exceeds one hour, it is recognized as the monotony driving.

When a new reference speed is less than the lowest value for the reference speed of 40 km/h (35 km/h, for example), the monotony driving is not detected, and only when the reference speed is above the 40 km/h, the device starts detecting the monotony driving again. In this case, a record of the time when the car reaches the reference speed is updated. When the new reference speed is set, the speed range of the monotony driving can be measured for its continuous duration while using the updated time as its reference point. Therefore, it is not necessary to record a plurality of corresponding times and speed within the speed range of the monotony driving, thus enabling to easily obtain the continuous duration from a time prior to the time when the reference speed is achieved. When the monotony driving is detected, the warning direction is outputted (step S43), and the measurement for the long driving or long distance driving is reset (step S44) . Then, it returns to the step S41.

If the monotony driving is not detected in the step S46, if the duration of the engine stop and turning off of the accessory power continues for 15 minutes or more is checked (step S47). If these conditions are met, if the ignition key is out and the door is locked are checked from signals from various sensors 3 (step S50), and if so, it is recognized as that the driver is back home, or parked the car in a parking lot for shopping or dining. Then, a series of the processes is completed. If the door is not locked, it recognized as that the driver has taken a break to recover fatigue, and the step S44 for resetting is performed so as to return to the step S41. Then, the same process will start again. If the engine is not stopped nor the accessory power is not turned off, or the engine is stopped and the accessory power is turned off only for less than 15 minutes in the step S47, a change of the driver is checked (step S48) . If the driver has been changed, the reset process of the step S44 is performed and the processes that follow are repeated. If the driver has not been changed, whether or not the car is on the expressway is checked (step S49), and if it enters the expressway, steps following the step S3 in FIG. 8 are repeated. If not on the expressway and still on the local roads, the process returns to the step S41.

According to the present embodiment, when the continuous driving detection means 21 detects continuous driving such as long driving or long distance driving is detected, or the monotony driving detection means 22 detects the monotony driving where the car drives on the local road for a certain period of time within the reference speed range, the warning output means such as the liquid crystal display 6 and the speaker 19 outputs the message to call for the driver's attention to warn the doze driving, it is possible to prevent doze driving before it happens. Moreover, if there is a break for more than a predetermined time period or if the driver change detection means 23 detects a driver change, the continuous driving detection means 21 reset its detection process, thus enhancing reliability of the detection result. Furthermore, by changing the criterion of determination for long driving or long distance driving depending on the road types or time zone, it is possible to improve detection accuracy.

### Embodiment 5

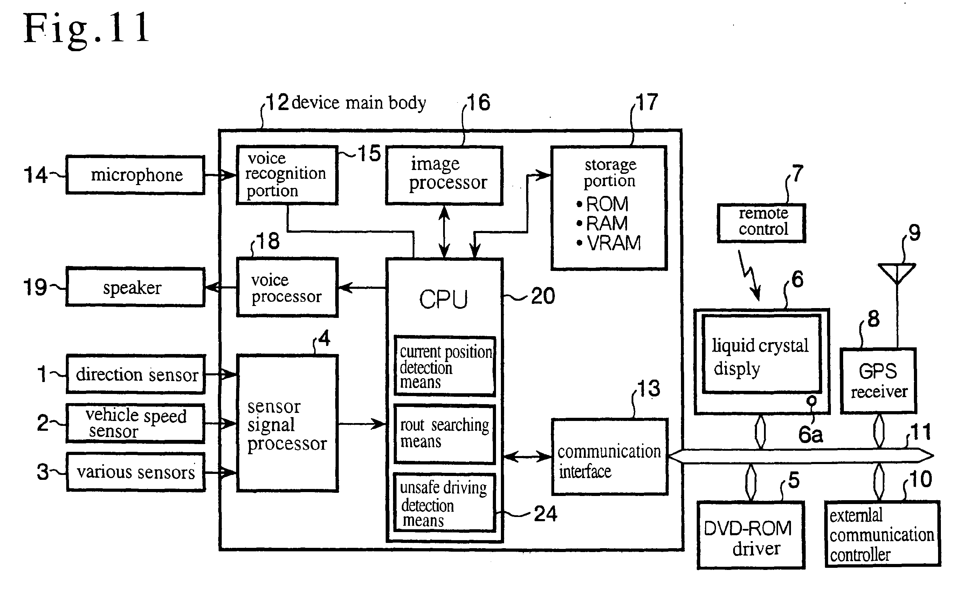

Hereinbelow, Embodiment 5 according to the present invention will be described with reference to the drawings. FIG. 11 is a block diagram showing a structure of an in-vehicle navigation device including a travel warning direction device according to Embodiment 5 of the present invention. As is clear from FIG. 11, the navigation device including the travel direction device according to Embodiment 5 basically has the same structure as the navigation device according to Embodiment 1 as shown in FIG. 1. Members and functional parts having the same reference numerals have the same function in the present embodiment, thus the detailed description for each part will be omitted.

In the present embodiment, the CPU 20 has a function added especially for realizing a purpose of raise awareness of the driver for the safe driving by encouraging the driver. The CPU (central processing unit) 20 has a unsafe driving detection means 24 in addition to the current position calculating means and the route searching means for the navigation functions, and these means are executed as software.

In the present embodiment, a vibration gyro, i.e., angular velocity sensor, is used as the direction sensor 1, and it detects not only the moving direction of the vehicle, but also abrupt steering of the steering wheel. Moreover, in the present embodiment, an acceleration sensor 3a is added or included in the various sensors 3 shown in FIG. 3. The acceleration sensor 3a detects both acceleration and deceleration, and can detect sudden start and stop of the vehicle. The speaker 19 and the voice processor 18 make up the voice output means, and they output voice warning to the sudden start, sudden stop, or abrupt steering in addition to the various directions such as search results or voice recognition results, and operation contents from the remote control 7.

Hereinbelow, operations in the present embodiment will be described. Basic operation of the navigation device overall is the same as that of the navigation device according to Embodiment 1, and thus, the description therefor is omitted therein.

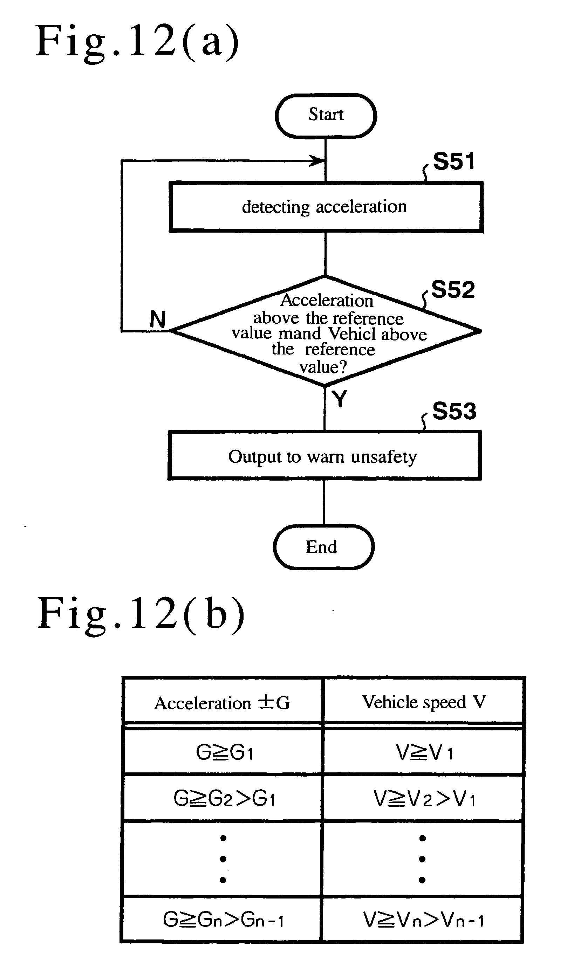

Next, operations when the driver starts or stops the car suddenly will be described. FIG. 12 is a flow chart illustrating processing operation of the CPU 20 when the driver drives unsafely by making sudden start or sudden stop or the like in the present embodiment.

In the processing operation, the vehicle speed sensor 2 operates all the time while the car is moving, and the vehicle speed pulse from the vehicle speed sensor 2 counted by a counter in the CPU 20 that counts a number of pluses in 2 seconds so as to detect the vehicle speed. The acceleration sensor 3a also operates all the time while the car is moving. For example, in case of the capacitance acceleration sensor, pendulum serving as the sensor is used as one of the poles of a capacitor. When acceleration force is added to the pendulum, capacitance of the capacitor changes due to displacement of the pendulum. Based on the change, acceleration (+) and deceleration (-) can be detected. The unsafe driving detection means 23 of the CPU 20 monitors acceleration value by inputting the signals from the acceleration sensor 3a (step S51). Whether or not the input acceleration is more than the reference value and the vehicle speed is faster than the reference value is checked to determine unsafe driving (step S52) . If it is recognized as unsafe driving, the CPU 20 read the warning voice signal among other voice signals stored in the ROM of the storage portion 17 so as to output the warning from the speaker 19 from the voice processor 18 to warn the driver (step S53).

A corresponding table of the acceleration and the vehicle speed as shown in FIG. 12B is stored in the ROM of the storage portion 17. When a value G of acceleration is above G1, and the vehicle speed V is above V1, then it is determined as unsafe driving. Determination of the unsafe driving is set so that the larger the vehicle speed V gets, the greater the acceleration value G becomes. These values are obtained by way of experiment. Even if the detected acceleration is the same, it is programmed in such a way that the warning is outputted when the vehicle speed is too fast whereas the warning is not outputted when the vehicle speed is slow. The warning voice may include, for example, "Watch out" "You'll crush" or "You'll be hit".

As such, in the present embodiment, when the driver starts or stops suddenly, the unsafe driving detection means 23 determines if that is unsafe driving by comparing with the predetermined reference value. If the unsafe driving is detected, the voice warning is given to tell the driver about the unsafe driving, so as to raise drivers' awareness for the safety drive.

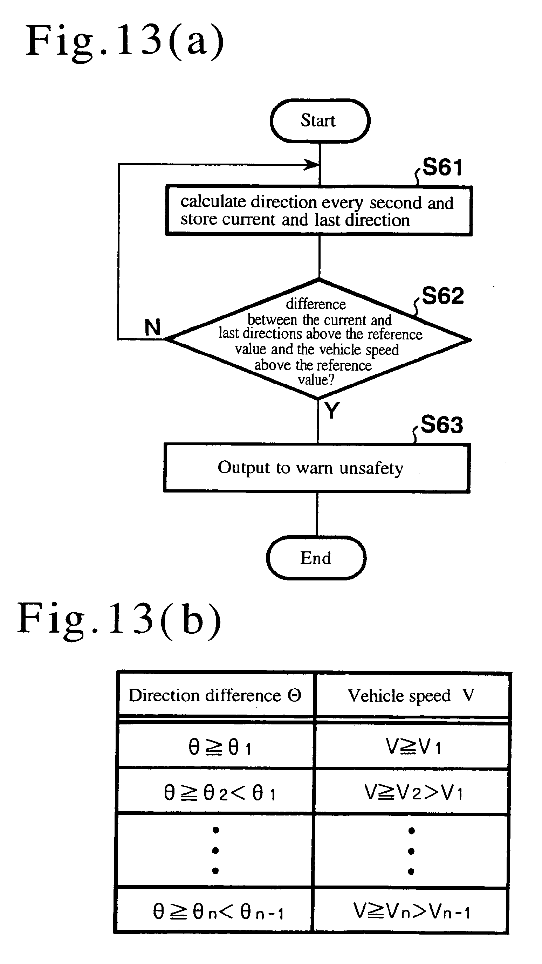

Next, operation in a case where the driver turns the steering wheel suddenly will be described. FIG. 13 is a flow chart illustrating processing operation of the warning direction by the CPU 20 in a case where the driver makes the abrupt steering in the present embodiment.

In the processing operation, although the direction sensor 1 is to detect the moving direction of the car, it also serves as detector for detecting the abrupt steering of the steering wheel of the vehicle in the present embodiment. Therefore, the moving direction is detected for every second based on the clock signal, and the last direction and the current direction are both stored in the RAM of the storage portion 17 (step S61). The unsafe driving detection means 23 of the CPU 20 compares a value of the last direction and a value of the current direction by inputting signals from the direction sensor 1, and whether or not a difference in the directions (rotation angle of the vehicle) is above the reference value and the vehicle speed is more than the reference value is checked so as to determine unsafe driving (step S62). If it is determined as unsafe driving, the CPU 20 reads the corresponding warning voice signal from the voice signals stored in the ROM of the storage portion 17, and outputs the warning from the speaker 19 via the voice processor 18 so as to warn the driver of unsafe driving (step S63).

The ROM of the storage portion 17 has a corresponding table of direction difference and vehicle speed as shown in FIG. 13B stored therein. When a value θ of the direction difference is θ1 or above, and when vehicle speed V is V1 or above, it is considered that the driver drives unsafely. The determination of the unsafe driving is set in such a manner that the larger the vehicle speed V, the smaller that value θ. These values are obtained by way of experiment. It is programmed in such a manner that even if the detected direction difference is the same, the warning is outputted when the vehicle speed is large, whereas the warning is not outputted when the vehicle speed is small. The warning voice may be, for example, "Watch out" or "You'll crush" and the like.

As such, in the present embodiment, the unsafe driving detection means 23 determines whether the driver drives safely or not by comparing the predetermined reference value if the driver makes abrupt steering. If unsafe driving is determined, the warning is outputted by voice, thus enabling to raise the driver's awareness for the safety drive.

In the above-described embodiment, whether or not to give the warning is changed depending on the driving condition. Alternatively, the warning may be given to a certain ratio with respect to a number of times of unsafe driving, or irregularly when unsafe driving is determined. For example, for regular service trucks, which take the same route through the year, the warning is outputted only once in certain number or times, once a week or a month. Moreover, expressions or sex or age of the voice source for the warning may be changed depending on the time zone (day time or night time), seasons, events such as Golden week holidays or New Year's Day, so that the warning can be outputted appropriately while taking possible congestion of roads into consideration. Moreover, in the above described embodiment, the abrupt steering of the steering wheel is detected by the rotation angle of the vehicle due to direction change of the vehicle. Alternatively, the angular velocity sensor provided to the steering wheel may detect the abrupt steering by detecting steering angle.

### Embodiment 6

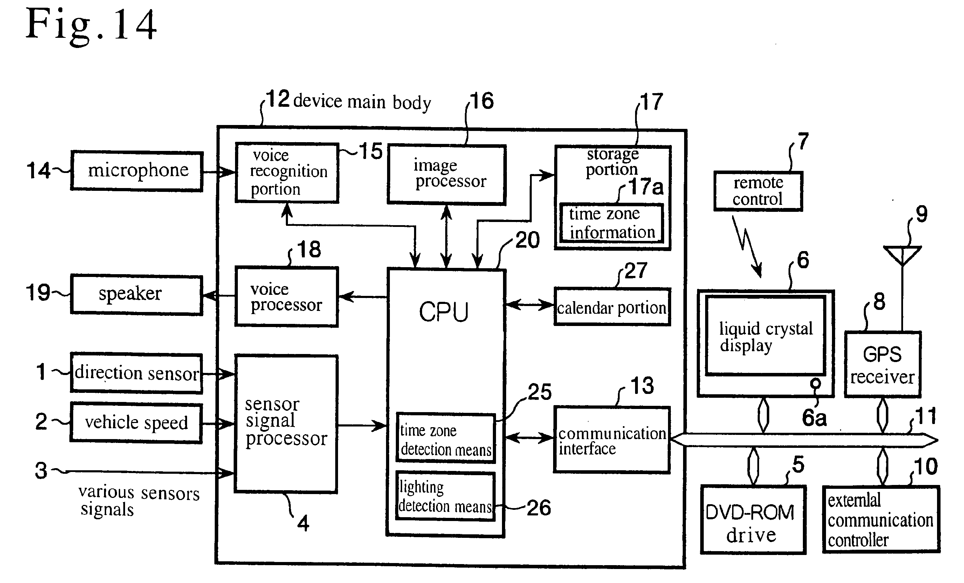

Hereinbelow, Embodiment 6 of the present invention will be described with reference to drawings. FIG. 14 is a block diagram showing an in-vehicle navigation device including a travel warning direction device according to Embodiment 6 of the present invention. As seen from FIG. 14, the navigation device including the travel direction device according to Embodiment 6 has basically the same structure as the navigation device according to Embodiment 1 as shown in FIG. 1. Members and functional parts having the same reference numerals as in FIG. 1 has the same functions in the present embodiment, thus descriptions for each part will be omitted herein.

The CPU 20 in the present embodiment has an added function for realizing a purpose for encouraging the driver's attention to prevent the vehicle light from being forgotten from turning off or on. Therefore, time zone information 17a is stored in the ROM or RAM of the storage portion 17. The CPU 20 includes a time zone detection means 25 and a lighting detection means 26 in addition to the current position calculating means and the route searching means for realizing the navigation function, and they are executed as software. A calendar portion 27 provides the data information of the, CPU 20. As various sensors 3, an illumination sensor for detecting lighting of the vehicle light, a sensor for detecting turning on of the lighting switch, a raindrop sensor for detecting rain and fog are used for the present embodiment.

Hereinbelow, operation of the present embodiment will be described. Basic operation of the navigation device overall is the same as that of the navigation device according to Embodiment 1, and thus, the description therefor is omitted.

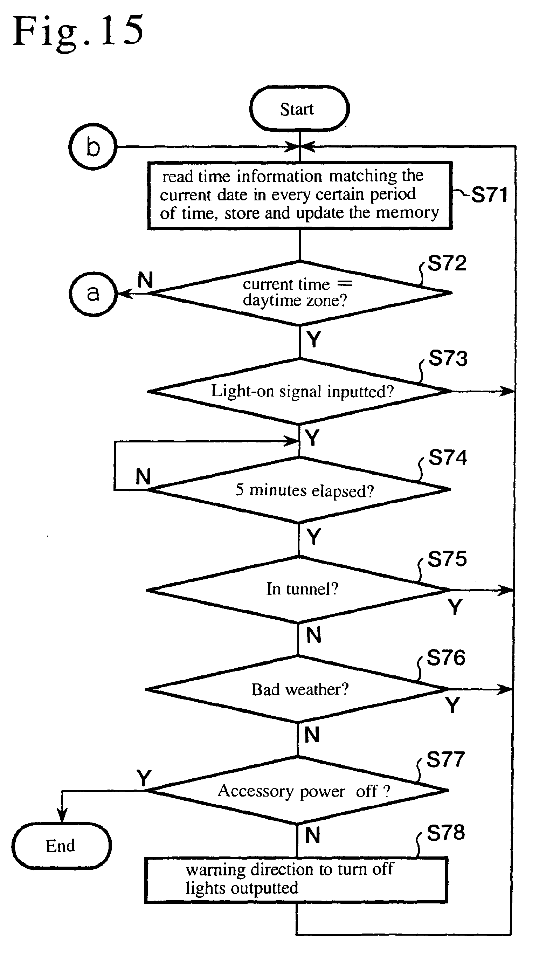

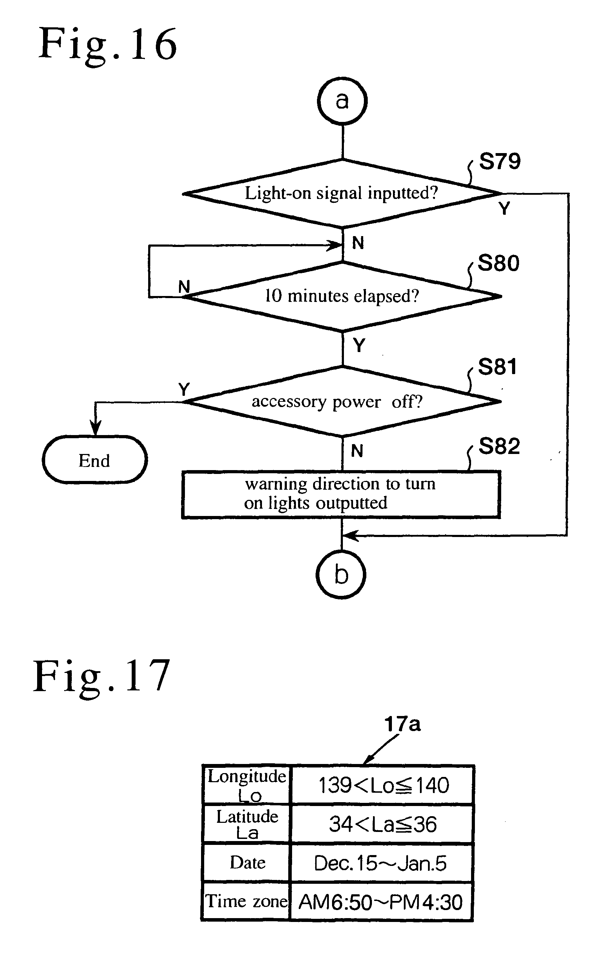

Next, operation for preventing the light from being forgotten from turning off or on in the present embodiment will be described. FIGs. 15 and 16 are flow charts illustrating processing operation of the CPU 20 for preventing the vehicle light from being forgotten from turning off or on.

In the processing operation, when the device is activated as the accessory power is turned on, the time detection means 22 of the CPU 20 accesses the time zone information 17 of the storage portion 17 with respect to each certain hour (every hour, for example) so as to obtain the time zone information that matches the current data. The obtained information is stored in the RAM of the storage portion 17 and updated (step S71). As shown in FIG. 17, the time zone information 17a includes information on latitude, longitude, date, and time zone. The longitude information is set for each 1 degree increment, and the latitude information is set for each 2 degrees increment. Based on the information on longitude and latitude detected by the current position detection means 21 of the CPU 20 and the current date information obtained from the calendar portion 24, the time zone detection means 22 extracts the time zone data for the daytime to store in the memory. In a case for the Tokyo area in FIG. 17, in a range of 139 to 140 degrees of longitude, and a range of 34 to 36 degrees of latitude, and in a range between December 15 to January 5, the daytime zone, i.e., from sunrise to sunset, is between about 6:50 a.m. to 4:30 p.m., and therefore, the nighttime is between the rest of the day, i.e., from 4:30 p.m. to 6:50 a.m.

The position information in the time zone information 17a may be set based on the governmental district included in the road map data instead of using the longitude/latitude information. The daytime time zone may be set starting from a predetermined hours later from sunrise to a predetermined hours before the sunset so as to include a twilight hours in the night time zone instead of in the daytime hour. In the above-described example, the time zone for the day time is from about 7:20 a.m. to 4:20 p.m. After the time zone information is obtained, the CPU 20 checks if the current time is in the daytime time zone (step S72) . If the current time is not within the daytime hours, i.e., when the current time is in the night time zone, the processes of FIG. 16 are performed thereafter. If it is the daytime hour, a step S73 is performed. The lighting detection means 23 of the CPU 20 checks if the light-on signal is inputted (step S73) . If it is not inputted, it returns to the step S71. If it is inputted, the CPU checks if 5 minutes have elapsed (step S74) . If 5 minutes have already elapsed, whether or not the car is driving in the tunnel is checked (step S75), and if not so, then whether the car is driving under adverse weather conditions such as heavy rain or fog is checked (step S76). If the car is neither in the tunnel nor under the bad weather, whether or not the accessory power is on is checked. (step S77). If the accessory power is off, then the process is completed, and if it is not off, the warning direction is given to turn off the light (step. S78) . If the car is driving in the tunnel, or under the bad weather, it returns to the step S71 without outputting the warning direction.

Whether the car is in the tunnel or not can be detected from the current position using the position information of tunnel in the road map data. Alternatively, it can be detected from a sudden change of brightness within a certain time period or ambient brightness detected by the ambient light sensor. It also can be notified manually from the driver or voice recognition, or dialogue result with the device main body using the voice recognition. The bad weather can be detected by the ambient sensor detecting brightness of surroundings. It also may be detected by the raindrop sensor that detects rainfalls or fog. Furthermore, the driver can manually or by voice recognition notify it, or the dialogue result with the device main body using the voice recognition may input the bad weather information.

In the step 72 of FIG. 15, if the current time is not in the daytime zone, i.e., if the current time is at night, whether or not the light-on signal is inputted is checked in the step S79 of FIG. 16. If it is inputted, it returns to the step S71, and if not, whether or not the same condition continues for 10 minutes is checked (step S80) . A time period of 10 minutes can be set arbitrarily, but in this case, it is set to 10 minutes out of consideration of the time is still the beginning of night time zone where surrounding is still in the twilight without a need to turn on the light, and of the surrounding may be bright enough even if the light is forgotten to be turned on. When 10 minutes have elapsed, whether or not the accessory power is on is checked (stepS81),and if it is off, the process is completed. If it is not off, the warning direction to turn on the light is outputted (step S82), and the process is returned to the step S71 of FIG. 15.

As such, according to the present embodiment, the time zone detection means 22 obtains time zone information that matches the current data and time from the time zone information 17a of the storage portion 17 to detect whether the current time belongs to the time zone for daytime or nighttime. The lighting detection means 23 detect if the vehicle light is turned on or not. If the lighting detection means 23 detects the light is on for more than predetermined period of time during the daytime time zone, the voice warning direction to tell the driver to turn off the light is outputted. If the lighting detection means 23 detects that the light is not on for more than predetermined period of time during the nighttime time zone, the voice warning direction to tell the driver to turn on the light is outputted. Therefore, it is possible to prevent that the headlight or turning signals is forgotten from turned off during the day, and to prevent that the headlight or the illumination light is forgotten to be turned on at night. When the car is in the tunnel under the heavy traffic or driving under the bad weather, the light is on continuously even during the daytime. By not outputting the warning under such circumstances, it is possible to response realistically.

The present invention has been described by way of preferred embodiments, but various other modifications will be apparent to and can be readily made by those skilled in the art without departing from scope and spirit of this invention. Accordingly, the present invention includes such modifications.

## Claims

1. A travel direction device comprising a controlling means for setting a predetermined area centered about a school as a school zone and giving warning direction for travelling cautions when a car drives roads in the set school zone based on school days information and time information.

2. A travel direction device comprising a controlling means for setting a school zone centered about a school depending on types of the school, and giving a warning direction of travelling cautions when a car drives the road in the set school zone.

3. A travel direction device comprising a controlling means for setting a school zone centered about a school depending on types of roads, and giving a warning direction of travelling cautions when a car drives the road in the set school zone.

4. A travel direction device comprising a controlling means for setting a school zone centered about a school depending on road density, and giving a warning direction of travelling cautions when a car drives the road in the set school zone.

5. A travel direction device comprising a controlling means for setting a school zone centered about a school depending on area division, and giving a warning direction of travelling cautions when a car drives the road in the set school zone.

6. A travel direction device according to claim 1, wherein contents of the direction changes depending on school types, road types, isolation duration of the area, and vehicle speed.

7. A travel direction device according to claim 1, wherein the direction is given before, during, and after passing the school zone.

8. A travel direction device according to claim 1, wherein a deceleration command signal is sent to a control device of the car when driving through the school zone so as to reduce the speed.

9. A travel warning direction device comprising a continuous driving detection means for detecting continuous driving condition by comparing to a pre-set reference value, and a warning output means for outputting the warning direction when the continuous driving is detected by the continuous driving detection means.

10. A travel warning direction device according to claim 9, wherein the continuous driving detection means detects long time driving.

11. A travel warning direction device according to claim 10, wherein the continuous driving detection means detects long distance driving.

12. A travel warning direction device according to claim 9, wherein detection by the continuous driving detection means is reset if discontinued for more than a predetermined period of time.

13. A travel warning direction device according to claim 9, wherein the travel warning direction device comprises a driver change detection means for detecting a change of a driver, and detection of the continuous driving detection means is reset when the driver change detection means detects the driver change.

14. A travel warning direction device according to claim 9, wherein the reference value changes depending on road types.

15. A travel warning direction device according to claim 14, wherein the reference value changed depending on time zone.

16. A travel warning direction device comprising a monotony driving detection means for detecting whether of not a car drives with a pre-set reference speed for a predetermined period of time when driving on local roads, and a voice output means for outputting a voice warning direction when the monotony driving detection means detects that the car drives within the reference speed range for the predetermined period of time.

17. A travel warning direction device according to claim 16, wherein when detecting the monotony driving, a new reference speed is set when the car drives in a speed out of the reference speed range.

18. A travel warning direction device according to claim 17, wherein the monotony driving detection means has a plurality of reference speed candidates for possible reference speed to be set, sets the reference speed range between the reference speed candidate faster than the set reference speed and the reference speed candidate slower than the set reference speed, stores the last time of the set reference speed, sets the reference speed candidate out of the reference speed range as a new reference speed when the vehicle speed is out of the reference speed range, and calculates the traveling time of the new reference speed range from the latest time when the set reference speed stored immediately before.

19. A travel warning direction device according to claim 9, wherein expressions, age and sex of the voice, changes depending on time zone, season, events or a number of travel.

20. A travel warning direction device, in which the device outputs the voice warning direction when a long driving or long distance travelling is detected by comparing a pre-set reference value.

21. A travel warning direction device, comprising an unsafe driving detection means for detecting unsafe driving by comparing a pre-set reference value.

22. A travel warning direction device according to claim 21, wherein the unsafe driving detection means detects sudden start and sudden stop of the car.

23. A travel warning direction device according to claim 21, wherein the unsafe driving detection means detects abrupt steering by rotation of the vehicle.

24. A travel warning direction device according to claim 21, wherein the unsafe driving detection means detects abrupt steering by rotation of steering wheel.

25. A travel warning direction device according to claim 23, wherein the unsafe driving detection means detects abrupt steering by using an angular velocity sensor.

26. A travel warning direction device according to claim 21, wherein the warning direction by the voice output means is given in a certain ratio relative to a number of times the warning is generated.

27. A travel warning direction device according to claim 21, wherein the warning direction by the voice output means is given irregularly with respect to a number of times the warning is generated.

28. A travel warning direction device according to claim 21, wherein expressions and sex and age of the voice by the voice output means changes depending on time zone, seasons, events, and a number of time of travel.

29. A travel warning direction device, comprising: a time zone detection means for detecting whether or not the time is in the daytime; a lighting detection means for detecting duration for the vehicle light being illuminated; and an output means for giving a warning direction to turn off the vehicle light when the daytime zone is detected and the vehicle light is detected as being on for more than a certain period of time.

30. A travel warning direction device according to claim 29, wherein the time zone detection means detects whether or not the time zone is in daytime from the current date information and position information.

31. A travel warning direction device according to claim 29, wherein the device comprises a means for detecting whether or not driving in the tunnel, and the warning direction is prohibited when driving the tunnel.

32. A travel warning direction device according to claim 29, wherein the device comprises a means for detecting bad weather, and the warning direction is prohibited when driving under the bad weather.

33. A travel warning direction device according to claim 29, wherein the warning direction is given when the time zone is not detected as the daytime, and if the vehicle light is not detected to be turned on for more than a predetermined period of time.
